# EUROPÄISCHE PATENTANMELDUNG

(11) **EP 4 400 255 A1**
(43) Veröffentlichungstag der Anmeldung: **17.07.2024**
(21) Anmeldenummer: 23216344.4
(22) Anmeldetag: 13.12.2023
(51) Int. Cl.: B23P 15/00, B22D 25/02, B23P 15/14, B23Q 3/00, B22D 17/00

(54) **VERFAHREN ZUR HERSTELLUNG UND BEARBEITUNG EINES ZYLINDERFÖRMIGEN HOHLKÖRPERS AUS ALUMINIUM ODER EINER ALUMINIUMLEGIERUNG SOWIE ZU DESSEN ANORDNUNG IN EINEM KRAFTFAHRZEUGGETRIEBE, ZYLINDERFÖRMIGER HOHLKÖRPER UND FAHRZEUGGETRIEBE**

(30) Priorität: 14.12.2022 DE 102022213597
(71) Anmelder: ZF Friedrichshafen AG, 88046 Friedrichshafen (DE)
(72) Erfinder: Brehmer, Martin, 88069 Tettnang (DE); Ruhl, Christian, 88046 Friedrichshafen (DE); Boehm, Helmut, 66386 St. Ingbert (DE)

(57) **Zusammenfassung**

Die Erfindung betrifft ein Verfahren zur Herstellung und Bearbeitung eines zylinderförmigen Hohlkörpers (20) aus Aluminium oder einer Aluminiumlegierung sowie zu dessen Anordnung in einem Kraftfahrzeuggetriebe, wobei die Herstellung des Hohlkörpers (20) mittels eines Gussprozesses (1) derart erfolgt, dass der Hohlkörper (20) eine innere und eine äußere Mantelfläche (21, 22) aufweist und an der inneren Mantelfläche (21) eine Innenverzahnung (24) aufweist, wobei der Hohlkörper (20) für die Bearbeitung zentrisch gespannt wird (2) und wobei die Anordnung des Hohlkörpers (20) im Fahrzeuggetriebe ausschließlich über Zahnflanken der Innenverzahnung (24) erfolgt (6). Das erfindungsgemäße Verfahren zeichnet sich dadurch aus, dass der Hohlkörper (20) ausschließlich auf einen Teilbereich (23) der inneren Mantelfläche (21) abseits der Innenverzahnung (24) zentrisch gespannt wird (2). Die Erfindung betrifft weiterhin einen entsprechenden zylinderförmigen Hohlkörper (20) sowie ein entsprechendes Fahrzeuggetriebe (29).

## Beschreibung

Die vorliegende Erfindung betrifft ein Verfahren zur Herstellung und Bearbeitung eines zylinderförmigen Hohlkörpers aus Aluminium oder einer Aluminiumlegierung sowie zu dessen Anordnung in einem Kraftfahrzeuggetriebe gemäß dem Oberbegriff von Anspruch 1, einen entsprechenden zylinderförmigen Hohlkörper sowie ein entsprechendes Fahrzeuggetriebe.

Im Bereich des Automobilbaus ist es bekannt, aus Gründen der Gewichtsreduzierung eines Fahrzeugs und damit einhergehend einer Kraftstoffeinsparung sowie einer Reduzierung des CO₂-Ausstoßes zunehmend Bauteile aus Leichtbaumaterialien zu verwenden. Da derartige Leichtbau-Bauteile in der Regel konventionelle Bauteile, beispielsweise aus Stahl hergestellte Bauteile, ersetzen, müssen sie dieselben Anforderungen hinsichtlich ihrer mechanischen Belastbarkeit, ihrer Korrosionsbeständigkeit und idealerweise auch hinsichtlich ihrer Bearbeitbarkeit und ihrer Herstellungskosten erfüllen. Als gut geeignet erwiesen haben sich in diesem Zusammenhang vor allem unterschiedliche Aluminiumlegierungen, deren Eigenschaften sich durch die unterschiedlichen Legierungsbestandteile in einem bestimmten Rahmen gezielt einstellen lassen. Die aus den unterschiedlichen Aluminiumlegierungen hergestellten Bauteile werden dabei üblicherweise als Gussteile hergestellt, wobei an die geometrische Beschaffenheit der Bauteile und insbesondere an deren geometrische Präzision hohe Anforderungen gestellt werden. In der Regel ist deshalb eine spanende Nachbearbeitung der aus Aluminium oder einer Aluminiumlegierung gegossenen Bauteile erforderlich.

Aus der DE 10 2011 056 942 B3 ist in diesem Zusammenhang ein Verfahren zur Herstellung eines dünnwandigen und zylinderförmigen Bauteils aus Aluminium oder aus einer Aluminiumlegierung bekannt. Das Bauteil wird dabei zunächst mittels Druckgusses erzeugt. Anschließend wird das Bauteil im rohen Zustand zentrisch gespannt und seine Innenfläche sowie seine Außenfläche werden spanend überdreht. Vom Überdrehen ausgenommen ist lediglich derjenige Teilbereich, auf dem das Bauteil gespannt wird. Schließlich wird das Bauteil rotiert, um eine ggf. vorhandene Unwucht zu ermitteln. Zur Reduzierung bzw. Beseitigung der Unwucht wird das Bauteil dann mit Ausgleichsbohrungen versehen. Der während des Überdrehens unbearbeitet gebliebene Teilbereich dient gleichermaßen als Lagerfläche zum Spannen des Bauteils während des Überdrehens bzw. während des Wuchtens als auch als Lagerfläche zum Einbau des Bauteils in eine Baugruppe.

Die DE 10 2019 207 311 A1 beschreibt ein der DE 10 2011 056 942 B3 ähnliches Verfahren zur Herstellung und Bearbeitung eines zylinderförmigen Hohlkörpers aus Aluminium oder einer Aluminiumlegierung. Das Verfahren der DE 10 2019 207 311 A1 unterscheidet sich jedoch vom Verfahren der DE 10 2011 056 942 B3 dadurch, dass der Hohlkörper für die Bearbeitung auf einen Kopfkreisdurchmesser der Innenverzahnung zentrisch gespannt wird, während der Einbau des Hohlkörpers in ein Getriebe über die Zahnflanken der Innenverzahnung erfolgt.

Die bekannten Herstellungsverfahren sind jedoch dahingehend nachteilbehaftet, als dass mit dem Spannen des Hohlkörpers während der Bearbeitung auf einen Bereich der Innenverzahnung ein Teilbereich der Mantelfläche ausgewählt wird, der keine durchgehende Anlagefläche für das Spannwerkzeug bietet. Dadurch werden vergleichsweise hohe Drücke im Bereich der Anlagefläche verursacht. Zudem wird durch die unterbrochene Anlagefläche ein Abweichen der Längsachse des Hohlkörpers von einer Drehachse während der Bearbeitung begünstigt.

Es ist eine Aufgabe der Erfindung, ein verbessertes Verfahren zur Herstellung und Bearbeitung eines zylinderförmigen Hohlkörpers aus Aluminium oder einer Aluminiumlegierung sowie zu dessen Anordnung in einem Kraftfahrzeuggetriebe vorzuschlagen.

Diese Aufgabe wird erfindungsgemäß durch das Verfahren zur Herstellung und Bearbeitung eines zylinderförmigen Hohlkörpers aus Aluminium oder einer Aluminiumlegierung sowie zu dessen Anordnung in einem Kraftfahrzeuggetriebe gemäß Anspruch 1 gelöst. Vorteilhafte Ausgestaltungen und Weiterbildungen der Erfindung gehen aus den abhängigen Ansprüchen hervor.

Die Erfindung betrifft ein Verfahren zur Herstellung und Bearbeitung eines zylinderförmigen Hohlkörpers aus Aluminium oder einer Aluminiumlegierung sowie zu dessen Anordnung in einem Kraftfahrzeuggetriebe, wobei die Herstellung des Hohlkörpers mittels eines Gussprozesses derart erfolgt, dass der Hohlkörper eine innere und eine äußere Mantelfläche aufweist und an der inneren Mantelfläche eine Innenverzahnung aufweist, wobei der Hohlkörper für die Bearbeitung zentrisch gespannt wird und wobei die Anordnung des Hohlkörpers im Fahrzeuggetriebe ausschließlich über Zahnflanken der Innenverzahnung erfolgt.

Das erfindungsgemäße Verfahren zeichnet sich dadurch aus, dass der Hohlkörper ausschließlich auf einen Teilbereich der inneren Mantelfläche abseits der Innenverzahnung zentrisch gespannt wird.

Erfindungsgemäß ist es also vorgesehen, dass zunächst ein zylinderförmiger Hohlkörper mittels eines im Stand der Technik an sich bekannten Gussprozesses entweder aus Aluminium oder aus einer Aluminiumlegierung gegossen wird. Die Festlegung auf einen spezifischen Gussprozess ist erfindungsgemäß nicht notwendig, solange der Gussprozess prinzipiell für das Gießen von Hohlkörpern aus Aluminium oder aus einer Aluminiumlegierung geeignet ist. Da es sich um einen zylinderförmigen Hohlkörper handelt, weist dieser einen runden Querschnitt sowie eine innere und eine äußere Mantelfläche auf. An der inneren Mantelfläche ist zudem eine ringförmig umlaufende Innenverzahnung vorgesehen. Der zylinderförmige Hohlkörper ist bevorzugt rohrartig ausgebildet, weist somit bevorzugt also zwei offene Axialenden auf, über die beispielsweise auf einfache Weise eine Bearbeitung der inneren Mantelfläche möglich ist. Sowohl die innere als auch die äußere Mantelfläche können vorteilhaft Oberflächenkonturen z.B. in der Form von umlaufenden Nuten, aufgesetzten, umlaufenden Kragen, Kerben, Sicken, Bohrungen oder ähnliches aufweisen. Um eine auf die Herstellung folgende Bearbeitung des Hohlkörpers zu vereinfachen, ist es vorgesehen, den Hohlkörper zentrisch zu spannen. Zu diesem Zweck sind im Stand der Technik Spannvorrichtungen bekannt, die ein zentrisches Spannen eines zylinderförmigen Hohlkörpers aus Aluminium oder aus einer Aluminiumlegierung ermöglichen. Das zentrische Spannen erfolgt dabei erfindungsgemäß ausschließlich auf einen Teilbereich der inneren Mantelfläche abseits der Innenverzahnung.

Die Erfindung zeigt somit eine Alternative auf, mittels der einerseits das funktionelle Spannen in den Flanken der Mitnahmeverzahnung, welches grundsätzlich sehr aufwendig ist, da die Spannelemente in Freiräume zwischen einzelnen Zähnen eintauchen müssen, vermieden werden kann. Andererseits kann auch das Spannen auf die Zahnköpfe vermieden werden, was oftmals zu Ungenauigkeiten der Ausrichtung des Hohlkörpers beim Spannen führt, da hier nur auf den einzelnen Zahnkopfsegmenten und nicht auf einer ununterbrochenen Fläche gespannt werden kann.

Stattdessen erfolgt das Spannen erfindungsgemäß also an einer vorteilhaft umlaufenden Fläche abseits vom Verzahnungsbereich. Dadurch ergibt sich eine klare Trennung des Funktionsbereichs, nämlich der Verzahnung, vom Spannbereich. Eine Beschädigung der Verzahnung durch die hohen Kräfte beim Spannen sowie eine ungewollte Aufweitung des Verzahnungsbereichs können dadurch ebenfalls zuverlässig verhindert werden. Zudem kann auf die durchgehende innere Mantelfläche gespannt werden, was eine vergleichsweise genauere Ausrichtung des Hohlkörpers erlaubt.

Indem der Hohlkörper für die Bearbeitung ausschließlich auf einen Teilbereich der inneren Mantelfläche abseits der Innenverzahnung zentrisch gespannt wird und die Anordnung des Hohlkörpers im Fahrzeuggetriebe ausschließlich über die Innenverzahnung erfolgt, werden für die Bearbeitung und die Anordnung des Hohlkörpers also unterschiedliche Flächen herangezogen. Das führt zu dem bereits genannten Vorteil, dass sowohl für das Spannen im Rahmen der Bearbeitung als auch für die Anordnung des Hohlkörpers die jeweils am besten geeigneten Bereiche des Hohlkörpers herangezogen werden können.

Da die gesamte innere Mantelfläche einschließlich der Innenverzahnung während des Gussprozesses durch dasselbe Gussformteil und im selben Herstellungsschritt hergestellt werden, sind die Mantelfläche und die Innenverzahunng weitestgehend präzise zueinander ausgerichtet, so dass sich beim Spannen während der Bearbeitung und bei der Anordnung im Fahrzeuggetriebe keine unterschiedlichen Rotationsachsen für den Hohlkörper ergeben. Somit wird der genaue Bezug zur Innenverzahnung und insbesondere zu den Zahnflanken der Innenverzahnung gewährleistet, welche die Funktionsflächen am Fertigteil darstellen.

Gemäß einer bevorzugten Ausführungsform der Erfindung ist es vorgesehen, dass der Teilbereich an die Innenverzahnung anliegt. Das bedeutet also, dass der Teilbereich, auf den gespannt wird, unmittelbar benachbart zur Innenverzahnung angeordnet ist. Bevorzugt ist die Innenverzahnung an einem äußersten axialen Rand des Hohlkörpers angeordnet und der Teilbereich ist, von außerhalb des Hohlkörpers gesehen, unmittelbar hinter der Innenverzahnung angeordnet.

Alternativ bevorzugt kann der Teilbereich aber auch von der Innenverzahnung beabstandet sein, beispielsweise einige Millimeter oder Zentimeter. Auch eine Anordnung des Teilbereichs am der Innenverzahnung gegenüberliegenden Axialende ist denkbar und bevorzugt.

Gemäß einer weiteren bevorzugten Ausführungsform der Erfindung ist es vorgesehen, dass der Teilbereich gegenüber einer Wandstärke des Hohlkörpers aufgedickt ist. Das bedeutet also, dass die Wandstärke des Teilbereichs größer ist als die Wandstärke des restlichen Hohlkörpers, ausgenommen ggf. den Bereich der Innenverzahnung. Die Wandstärke im Bereich der Innenverzahnung kann ebenfalls gegenüber der Wandstärke des restlichen Hohlkörpers aufgedickt sein. Somit können über den Teilbereich und ggf. über die Innenverzahnung auch hohe Kräfte in den Hohlkörper eingeleitet werden.

Sofern der Teilbereich an die Innenverzahnung anliegt, kann die Wandstärke in diesem gemeinsamen Bereich eine gemeinsame Dicke aufweisen.

Gemäß einer weiteren bevorzugten Ausführungsform der Erfindung ist es vorgesehen, dass der Gussprozess als Druckgussprozess erfolgt. Dabei wird bevorzugt zunächst das Aluminium bzw. die Aluminiumlegierung in flüssiger Form in eine entsprechende Füllkammer einer Gussvorrichtung gefüllt, wobei die Füllkammer durch eine Druckbeaufschlagung des Aluminiums bzw. der Aluminiumlegierung mittels eines Gießkolbens unter Druck befüllt wird. Die Druckbeaufschlagung bleibt vorteilhaft bestehen, bis das Aluminium bzw. die Aluminiumlegierung erstarrt ist. Dadurch lassen sich vergleichsweise präzise geometrische Formen mit nur geringem Ausschuss erzeugen.

Gemäß einer weiteren bevorzugten Ausführungsform der Erfindung ist es vorgesehen, dass die innere und/oder die äußere Mantelfläche im Rahmen der Bearbeitung des Hohlkörpers überdreht werden, wobei jedoch der Teilbereich unüberdreht bleibt. Bevorzugt bleibt der Teilbereich nicht nur unüberdreht sondern spanend völlig unbearbeitet. Daraus ergibt sich der Vorteil, dass die Geometrie des gegossenen Hohlkörpers soweit erforderlich spanend nachgearbeitet wird, so dass sich eine äußerst präzise Formgebung realisieren lässt. Die mittels spanender Bearbeitung erreichbare geometrische Präzision ist dabei in der Regel höher als die mittels eines Gussprozesses erreichbare geometrische Präzision. Da der Hohlkörper zur Verwendung in einem Fahrzeuggetriebe und dort insbesondere zur Übertragung von Drehmomenten bzw. Drehzahlen vorgesehen ist, sind gute Rundlaufeigenschaften und somit eine hohe geometrische Präzision wichtige Voraussetzungen.

Der Teilbereich wird dabei schon deswegen nicht überdreht, da der Hohlkörper hier gespannt wird und der Teilbereich somit nicht zugänglich ist für ein Drehwerkzeug, zumindest nicht ohne Umspannvorgang. Ein anschließendes Umspannen auf einen anderen Bereich der Oberfläche des Hohlkörpers und damit verbunden ein Überdrehen des Teilbereichs wäre zwar möglich, würde jedoch zusätzlichen Aufwand und damit zusätzliche Kosten verursachen und soll dementsprechend vermieden werden. Zudem könnte ein Umspannen auf einen anderen Bereich der Oberfläche des Hohlkörpers sowie ein damit verbundenes Überdrehen des Teilbereichs dazu führen, dass der Hohlkörper als solcher eine anderen Rotationsachse aufweist als der Teilbereich, was wiederum die Rundlaufeigenschaften im Fahrzeuggetriebe nachteilig beeinflussen würde.

Gemäß einer weiteren bevorzugten Ausführungsform der Erfindung ist es vorgesehen, dass der Hohlkörper im Rahmen der Bearbeitung gewuchtet wird. Das Wuchten im Sinne der Erfindung umfasst dabei gleichermaßen das Ermitteln von Unwuchten sowie deren Beseitigung. Die Beseitigung der Unwuchten muss nicht zwingend vollständig sein, aber zumindest in einem solchen Maße erfolgen, dass eine vorgegebene maximal zulässige Unwucht nicht mehr überschritten wird. Durch das Wuchten lassen sich somit sehr gute Gleichlaufeigenschaften des Hohlkörpers erzielen, was wiederum zu einer geringeren Geräuschemission und einer längeren Lebensdauer des Fahrzeuggetriebes beiträgt, in welchem der Hohlkörper angeordnet wird. Das Wuchten erfolgt dabei bevorzugt spanend, indem ein Materialabtrag gezielt an den Stellen des Hohlkörpers erfolgt, die zu der jeweils festgestellten Unwucht führen. Der Materialabtrag wiederum erfolgt bevorzugt durch das Bohren von größer oder kleiner dimensionierten Öffnungen durch die Mantelflächen des Hohlkörpers, wobei ein Durchmesser der jeweils angebrachten Bohröffnung abhängig von einer Stärke der festgestellten Unwucht sein kann. Diese Bohröffnungen dienen entsprechend als Wuchtbohrungen.

Die Unwuchten werden bevorzugt mittels einer hierzu geeigneten, an sich bekannten Vorrichtung zum Ermitteln der Unwuchten ermittelt. Da das Wuchten im Rahmen der Bearbeitung erfolgt, ist der Hohlkörper hierbei auf den Kopfkreisdurchmesser der Innenverzahnung gespannt.

Gemäß einer weiteren bevorzugten Ausführungsform der Erfindung ist es vorgesehen, dass die Herstellung des Hohlkörpers derart an das Fahrzeuggetriebe angepasst erfolgt, dass ein Kopfkreisdurchmesser der Innenverzahnung nach der Anordnung des Hohlkörpers im Fahrzeuggetriebe kontaktfrei bleibt. Das bedeutet also, dass die Zahnkopfflächen der Innenverzahnung nicht in Kontakt bzw. in Anlage sind mit Kontaktstellen oder Anlageflächen irgendeines Elements des Fahrzeuggetriebes. Im Gegenteil werden zur Übertragung von Drehmomenten ausschließlich die hierzu geeigneten Flanken der Innenverzahnung verwendet.

Bevorzugt ist es vorgesehen, dass die Herstellung des Hohlkörpers derart erfolgt, dass der Hohlkörper mehr als nur eine Innenverzahnung aufweist. Daraus ergibt sich der Vorteil, dass der Hohlkörper vorteilhaft zur Übertragung von Drehmomenten im Fahrzeuggetriebe verwendet werden kann. Eine erste Innenverzahnung dient dabei als Eingang für das zu übertragende Drehmoment während eine zweite Innenverzahnung als Ausgang für das zu übertragende Drehmoment dient.

Gemäß einer weiteren bevorzugten Ausführungsform der Erfindung ist es vorgesehen, dass im Rahmen der Bearbeitung des Hohlkörpers der Hohlkörper entgratet und/oder gebürstet und/oder gewaschen wird. Das Bürsten bzw. Waschen des Hohlkörpers kann dabei sowohl vor dem Wuchten als auch nach dem Wuchten erfolgen. Das Entgraten findet hingegen bevorzugt ausschließlich nach dem Wuchten statt, da somit vorteilhaft alle Grate entfernt werden können, auch diese, welche durch ggf. angebrachte Wuchtbohrungen entstanden sind. Dadurch kann gewährleistet werden, dass evtl. vorhandene Materialpartikel bzw. Grate nicht in das Fahrzeuggetriebe gelangen und den Wirkungsgrad des Fahrzeuggetriebes nachteilig beeinflussen.

Die Erfindung betrifft weiterhin einen zylinderförmigen Hohlkörper aus Aluminium oder einer Aluminiumlegierung. Der erfindungsgemäße Hohlkörper zeichnet sich dadurch aus, dass der Hohlkörper nach dem erfindungsgemäßen Verfahren hergestellt ist. Daraus ergeben sich die bereits im Zusammenhang mit dem erfindungsgemäßen Verfahren genannten Vorteile auch für den erfindungsgemäßen Hohlkörper.

Die Erfindung betrifft schließlich auch ein Fahrzeuggetriebe. Das erfindungsgemäße Fahrzeuggetriebe zeichnet sich dadurch aus, dass das Fahrzeuggetriebe mindestens einen erfindungsgemäßen zylinderförmigen Hohlkörper umfasst. Dies führt zu den bereits beschriebenen Vorteilen.

Nachfolgend wird die Erfindung anhand von in den Figuren dargestellten Ausführungsformen beispielhaft erläutert.

Es zeigen:
- Fig. 1: beispielhaft eine mögliche Ausführungsform eines erfindungsgemäßen Verfahrens zur Herstellung und Bearbeitung eines zylinderförmigen Hohlkörpers aus Aluminium oder einer Aluminiumlegierung sowie zu dessen Anordnung in einem Kraftfahrzeuggetriebe,
- Fig. 2: beispielhaft eine mögliche Ausbildungsform eines erfindungsgemäßen zylindrischen Hohlkörpers und
- Fig. 3: beispielhaft und schematisch einen Ausschnitt eines Querschnitts eines erfindungsgemäßen Hohlkörpers.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

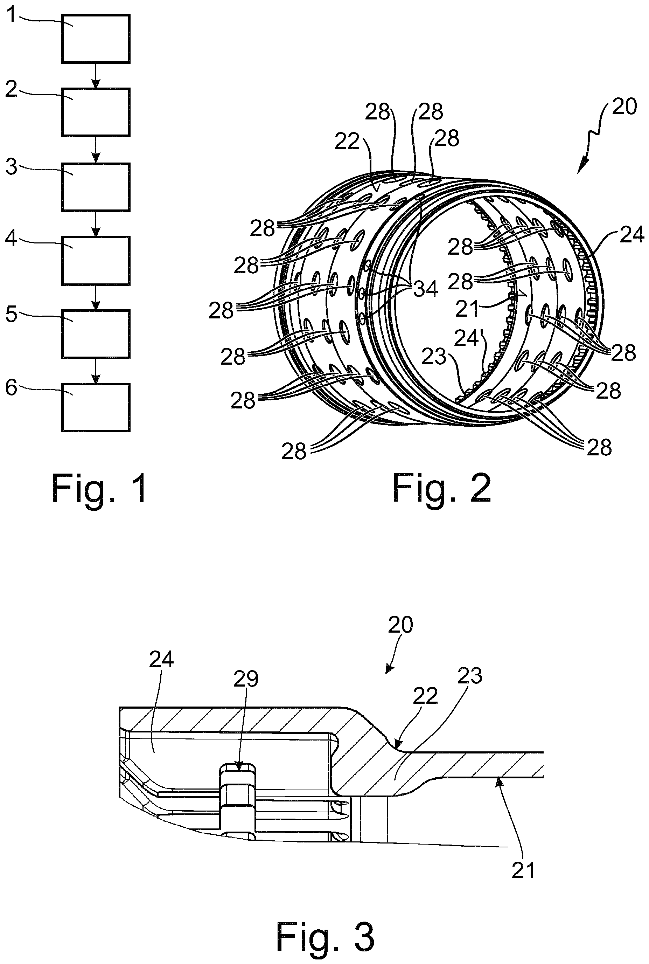

Fig. 1 zeigt beispielhaft eine mögliche Ausführungsform eines erfindungsgemäßen Verfahrens zur Herstellung und Bearbeitung eines zylinderförmigen Hohlkörpers 20 aus Aluminium oder einer Aluminiumlegierung sowie zu dessen Anordnung in einem Kraftfahrzeuggetriebe in Form eines Flussdiagramms.

Dabei erfolgt in Verfahrensschritt 1 zunächst die Herstellung des Hohlkörpers 20 mittels eines Gussprozesses, beispielsgemäß mittels eines Druckgussprozesses. Die Herstellung erfolgt nach Maßgabe eines verwendeten Gusswerkzeugs bzw. nach Maßgabe einer Füllkammer des Gusswerkzeugs derart, dass der Hohlkörper 20 eine innere und eine äußere Mantelfläche 21, 22 aufweist, wobei an der inneren Mantelfläche beispielsgemäß eine erste Innenverzahnung 24 und eine zweite Innenverzahnung 24` sowie ein Teilbereich 23 zum Spannen des Hohlkörpers 20 vorgesehen sind. Außerdem erfolgt die Herstellung des Hohlkörpers 20 in Schritt 1 derart an das Fahrzeuggetriebe angepasst, dass ein Kopfkreisdurchmesser 25 der Innenverzahnungen 24 und 24 nach der Anordnung des Hohlkörpers 20 im Fahrzeuggetriebe kontaktfrei bleibt.

Für eine Bearbeitung des Hohlkörpers 20 wird der Hohlkörper 20 dann in Schritt 2 zentrisch gespannt. Das zentrische Spannen erfolgt dabei ausschließlich auf den unüberdrehten bzw. nicht spanend bearbeiteten Teilbereich 23, der beispielsgemäß abseits, aber unmittelbar angrenzend an die erste Innenverzahnung 24 angeordnet ist.

In Verfahrensschritt 3 werden im Rahmen der Bearbeitung des Hohlkörpers 20 sowohl die innere Mantelfläche 21 als auch die äußere Mantelfläche 22 überdreht, wobei nur der Teilbereich 23 und die Innenverzahnungen 24, 24' unbearbeitet bleiben. Das Überdrehen der inneren und äußeren Mantelflächen 21, 22 erfolgt beispielsgemäß mittels einer hierzu ausgebildeten Drehvorrichtung.

Im folgenden Verfahrensschritt 4 wird der Hohlkörper 20 erneut auf den Teilbereich 23 gespannt und gewuchtet. Im Rahmen des Wuchtens werden zunächst die Unwuchten des Hohlkörpers 20 ermittelt, was mittels einer hierzu ausgebildeten Vorrichtung zum Ermitteln von Unwuchten erfolgt. Sofern hierbei eine unzulässige Unwucht erkannt wird, wird im Rahmen des Wuchtens überschüssiges Material am Hohlkörper 20, welches den Rundlauffehler verursacht, entfernt. Das Entfernen des überschüssigen Materials erfolgt beispielsgemäß durch das Setzen von Wuchtbohrungen 34 durch die innere und äußere Mantelfläche 21, 22.

In einem folgenden Verfahrensschritt 5 wird der Hohlkörper 20 entgratet, gebürstet und gewaschen, um ggf. vorhandene Grate und Verunreinigungen zu entfernen.

In Verfahrensschritt 6 schließlich wird der Hohlkörper 20 im Fahrzeuggetriebe angeordnet, wobei die Anordnung ausschließlich über Zahnflanken der Innenverzahnungen 24 und 24' erfolgt.

Fig. 2 zeigt beispielhaft eine mögliche Ausbildungsform eines erfindungsgemäßen zylindrischen Hohlkörpers 20. Der dargestellte Hohlkörper 20 besteht aus einer Aluminiumlegierung, beispielsgemäß aus AlSi9Cu3(Fe), und wurde mittels eines Druckgussprozesses hergestellt. Er weist eine innere Mantelfläche 21 und eine äußere Mantelfläche 22 auf, die beide im Rahmen einer Bearbeitung des Hohlkörpers 20 überdreht wurden. Lediglich ein Teilbereich 23, die erste Innenverzahnung 24 und die zweite Innenverzahnung 24' sind unüberdreht bzw. spanend unbearbeitet geblieben, also noch im Rohzustand. Die Innenverzahnungen 24, 24` wurden dabei gemeinsam mit dem gesamten Hohlkörper 20 während des Gussprozesses hergestellt.

Weiterhin zu sehen ist, dass der Hohlkörper 20 eine Vielzahl von Bohrungen 28 aufweist. Die Bohrungen 28 weisen dabei unterschiedliche Durchmesser auf und dienen einerseits der Gewichtsreduzierung des Hohlkörpers 20 wie auch dem Ölabfluss aus dem Hohlkörper 20 bei einer Verwendung des Hohlkörpers 20 im Fahrzeuggetriebe.

Zusätzlich zu sehen sind Wuchtbohrungen 34, die vornehmlich möglichst nahe beim Teilbereich 23 bzw. bei den Innenverzahnungen 24, 24`angeordnet sind. Die Wuchtbohrungen 34 können je nach benötigtem Materialabtrag unterschiedliche Durchmesser aufweisen und dienen zur Verbesserung der insbesondere akustischen Rundlaufeigenschaften des Hohlkörpers 20 im Fahrzeuggetriebe. Darüber hinaus tragen die Wuchtbohrungen 34 aber auch zur weiteren Gewichtsreduzierung des Hohlkörpers 20 und zum nochmals verbesserten Ölabfluss aus dem Hohlkörper 20 bei.

Fig. 3 zeigt beispielhaft und schematisch einen Ausschnitt eines Querschnitts eines erfindungsgemäßen Hohlkörpers 20. Im Ausschnitt dargestellt ist ein Teil der äußeren Mantelfläche 22 sowie ein Teil der inneren Mantelfläche 21 mit der Innenverzahnung 24 und dem Teilbereich 23. Wie zu sehen ist, sind die Innenverzahnung 24 und der Teilbereich 23 unmittelbar zueinander benachbart, d.h., die Innenverzahnung 24 geht in den Teilbereich 23 über. Sowohl die Innenverzahnung 24 als auch der Teilbereich 23 sind gegenüber der Wandstärke des restlichen Hohlkörpers 20 aufgedickt, so dass die Innenverzahnung 24 und der Teilbereich 23 mechanisch stabiler ausgebildet sind und als Angriffspunkt auch für vergleichsweise hohe Kräfte bzw. Drehmomente geeignet sind. Die Innenverzahnung 24 ist dabei an einem Axialende des Hohlkörpers 20 angeordnet und weist eine Nut 29 auf, in welche beispielsgemäß ein Sprengring eingesetzt werden kann, um die Anordnung des Hohlkörpers 20 im Fahrzeuggetriebe an einer entsprechenden Zahnscheibe des Fahrzeuggetriebes zu sichern.

### Bezugszeichen

- 1: Herstellung des Hohlkörpers
- 2: zentrisches Spannen
- 3: Überdrehen der inneren und äußeren Mantelfläche
- 4: Wuchten
- 5: Entgraten, Bürsten und Waschen
- 6: Anordnung im Fahrzeuggetriebe
- 20: Hohlkörper
- 21: innere Mantelfläche
- 22: äußere Mantelfläche
- 23: Teilbereich mit Innenverzahnung
- 24, 24': Innenverzahnung, erste Innenverzahnung, zweite Innenverzahnung
- 25: Kopfkreisdurchmesser
- 28: Bohrung
- 29: Nut
- 34: Wuchtbohrung

## Patentansprüche

1. Verfahren zur Herstellung und Bearbeitung eines zylinderförmigen Hohlkörpers (20) aus Aluminium oder einer Aluminiumlegierung sowie zu dessen Anordnung in einem Kraftfahrzeuggetriebe,
wobei die Herstellung des Hohlkörpers (20) mittels eines Gussprozesses (1) derart erfolgt, dass der Hohlkörper (20) eine innere und eine äußere Mantelfläche (21, 22) aufweist und an der inneren Mantelfläche (21) eine Innenverzahnung (24) aufweist, wobei der Hohlkörper (20) für die Bearbeitung zentrisch gespannt wird (2) und wobei die Anordnung des Hohlkörpers (20) im Fahrzeuggetriebe ausschließlich über Zahnflanken der Innenverzahnung (24) erfolgt (6),
**dadurch gekennzeichnet, dass** der Hohlkörper (20) ausschließlich auf einen Teilbereich (23) der inneren Mantelfläche (21) abseits der Innenverzahnung (24) zentrisch gespannt wird (2).

2. Verfahren nach Anspruch 1,
**dadurch gekennzeichnet, dass** der Teilbereich (23) an die Innenverzahnung (24) anliegt.

3. Verfahren nach mindestens einem der Ansprüche 1 und 2,
**dadurch gekennzeichnet, dass** der Teilbereich (23) gegenüber einer Wandstärke des Hohlkörpers (20) aufgedickt ist.

4. Verfahren nach mindestens einem der Ansprüche 1 bis 3,
**dadurch gekennzeichnet, dass** der Gussprozess als Druckgussprozess erfolgt.

5. Verfahren nach mindestens einem der Ansprüche 1 bis 4,
**dadurch gekennzeichnet, dass** die innere und/oder die äußere Mantelfläche (21, 22) im Rahmen der Bearbeitung des Hohlkörpers (20) überdreht werden (3), wobei jedoch der Teilbereich (23) unüberdreht bleibt.

6. Verfahren nach mindestens einem der Ansprüche 1 bis 5,
**dadurch gekennzeichnet, dass** der Hohlkörper (20) im Rahmen der Bearbeitung gewuchtet wird (4).

7. Verfahren nach mindestens einem der Ansprüche 1 bis 6,
**dadurch gekennzeichnet, dass** die Herstellung des Hohlkörpers (20) derart an das Fahrzeuggetriebe angepasst erfolgt (1), dass ein Kopfkreisdurchmesser (25) der Innenverzahnung nach der Anordnung des Hohlkörpers (20) im Fahrzeuggetriebe (6) kontaktfrei bleibt.

8. Verfahren nach mindestens einem der Ansprüche 1 bis 7,
**dadurch gekennzeichnet, dass** im Rahmen der Bearbeitung des Hohlkörpers (20) der Hohlkörper (20) entgratet und/oder gebürstet und/oder gewaschen wird (5).

9. Zylinderförmiger Hohlkörper (20) aus Aluminium oder einer Aluminiumlegierung, **dadurch gekennzeichnet, dass** der Hohlkörper (20) nach einem Verfahren nach mindestens einem der Ansprüche 1 bis 8 hergestellt ist.

10. Fahrzeuggetriebe,
**dadurch gekennzeichnet, dass** das Fahrzeuggetriebe mindestens einen zylinderförmigen Hohlkörper (20) nach Anspruch 9 umfasst.
